# EUROPEAN PATENT SPECIFICATION

(11) **EP 3 385 089 B1**
(45) Date of publication and mention of the grant of the patent: **29.01.2020**
(21) Application number: 16870360.1
(22) Date of filing: 31.10.2016
(51) Int. Cl.: B60B 35/16, F16C 41/00, B60B 27/00

(54) **ROLLING BEARING UNIT FOR DRIVE WHEEL SUPPORT**
KUGELLAGEREINHEIT FÜR EINE ANTRIEBSRADSTÜTZE
UNITÉ DE PALIER À ROULEMENT POUR SUPPORT DE ROUE MOTRICE

(30) Priority: 04.12.2015 JP 2015237377; 21.01.2016 JP 2016009680
(43) Date of publication of application: 10.10.2018
(73) Proprietor: NSK Ltd., Tokyo 141-8560 (JP)
(72) Inventor: GUNJI, Daisuke, Fujisawa-shi, Kanagawa 251-8501 (JP); MATSUDA, Yasuyuki, Fujisawa-shi, Kanagawa 251-8501 (JP)
(74) Representative: Grünecker Patent- und Rechtsanwälte PartG mbB
(86) International application number: PCT/JP2016/082244
(87) International publication number: WO 2017/094420

(56) References cited:
- JP-A- 2000 329 593
- JP-A- 2002 130 262
- JP-A- 2004 224 069
- JP-A- 2005 224 022
- JP-A- 2005 280 395
- JP-A- 2006 232 195
- JP-A- 2008 184 110
- JP-A- 2008 292 223
- JP-A- 2008 302 926
- JP-A- 2008 302 926
- JP-A- 2010 025 263
- JP-A- 2010 025 263
- US-A1- 2007 159 352
- US-A1- 2007 181 357
- US-A1- 2013 337 959

## Description

### TECHNICAL FIELD

The present invention relates to a driving wheel supporting rolling bearing unit according to the preamble of claims 1 and 2. Such a driving wheel supporting rolling bearing unit is known from JP 2010 025 263 A.

### BACKGROUND ART

In recent years, electric automobiles have attracted attention as a measure against environmental problems such as global warming and air pollution. An in-wheel motor type electric automobile is considered, in which an electric motor is disposed in a wheel configuring a vehicle wheel to rotationally drive the vehicle wheel without using a differential or a drive shaft. In such an in-wheel motor, it is considered to provide a reduction gear for increasing a driving force of the electric motor in the vicinity of a tire so as to reduce the size of the electric motor.

For example, Patent Document 1 describes a structure in which a planetary reduction gear is incorporated in a bearing unit, and the driving force of the electric motor is increased and transmitted to the vehicle wheel. Here, since the planetary reduction gear is compact and can transmit a large torque, it is suitable for use in the in-wheel motor, but there is a disadvantage that a number of components is large and the structure becomes complicated. Further, since an input shaft and an output shaft of the planetary reduction gear are provided coaxially, there is a problem that it is difficult to ensure a minimum ground height of the in-wheel motor part when the planetary reduction gear is applied to the in-wheel motor.

In order to solve the above problem, for example, Patent Document 2 describes a structure in which an output shaft of an electric motor configuring an in-wheel motor is offset with respect to a center axis of a bearing unit by using a parallel shaft reduction gear (counter gear mechanism). According to such a structure, it is easy to secure the minimum ground height. However, in the invention described in Patent Document 2, since it is difficult to ensure a sufficient reduction ratio only with the parallel shaft reduction gear, a planetary reduction gear is provided as a final reduction gear, and therefore, a problem that a number of components is large and the structure becomes complicated has not been solved.

Incidentally, various control methods and control devices have been proposed to improve motion performance and safety performance of automobiles. Since motion such as running, turning and stopping of an automobile can only be operated via a friction force (grip force, tire force) between a tire and a road surface, detecting a force (load) acting on the tire can greatly contribute to performance improvement related to motion control. Therefore, a plurality of techniques related to detecting the force acting on the tire has been proposed. For example, Patent Document 3 and a prior application (Japanese Patent Application No. 2015-186307) which has been not published yet and which the applicant of the present invention considers prior to the present invention describe a vehicle wheel supporting rolling bearing unit having a function of supplying electric power to a sensor provided on a vehicle wheel (tire or wheel) and communicating information acquired by the sensor to a vehicle body side wirelessly. In Patent Document 3 and the prior application, an electric generator is incorporated in the vehicle wheel supporting rolling bearing unit as a power supply means, but it is not easy to provide an electric generator with a sufficient power generation amount in a limited space inside the bearing unit. Particularly, in a case where the vehicle wheel supporting bearing unit is for a driving wheel, since a shaft (for example, a drive shaft) for transmitting the driving force to a rotation side bearing ring member (hub) is connected to a center hole thereof, it is difficult to dispose the electric generator or a wireless communication circuit in a space (especially on a center axis of the rotation side bearing ring member) at an axial inner side of the rotation side bearing ring member, and the entire device tends to become large.

As another prior art related to the present invention, for example, there is an invention described in Patent Document 4. Patent document 4 describes an invention in which a contactless power supply device is provided in a bearing unit.

### PRIOR ART DOCUMENT

### PATENT DOCUMENT

Patent Document 1: JP-A-2013-32804
Patent Document 2: JP-A-2009-12523
Patent Document 3: JP3983509B
Patent Document 4: JP5085173B

### SUMMARY OF INVENTION

### PROBLEMS TO BE SOLVED BY INVENTION

The present invention provides a driving wheel supporting rolling bearing unit in which the driving force can be input from a position offset with respect to the center axis of the bearing unit, a sufficient reduction ratio can be obtained while preventing the increase of the number of components, and an electric generator and a wireless communication device can be disposed without enlarging the entire device.

### MEANS FOR SOLVING THE PROBLEMS

A driving wheel supporting rolling bearing unit according to the present invention rotatably supports a vehicle wheel (driving wheel) to a suspension device and includes a stationary side bearing ring member (for example, an outer ring), a rotation side bearing ring member (for example, a hub), a plurality of rolling elements, a rotation side flange (a wheel side flange), an internal gear, an electric generator, and a wireless communication device.

The stationary side bearing ring member is supported and fixed to the suspension device to be non-rotatable even during use.

The rotation side bearing ring member rotates together with the vehicle wheel while supporting and fixing the vehicle wheel.

Each of the rolling elements is rollably provided between peripheral surfaces of the stationary side bearing ring member and the rotation side bearing ring member which face each other.

The rotation side flange is configured to support and fix the vehicle wheel and is provided on a part (for example, an outer peripheral surface of an axially outer end portion) of the rotation side bearing ring member.

The internal gear configures a reduction gear for transmitting a driving force of a driving source such as an electric motor to the rotation side bearing ring member and is fixed to the rotation side flange (for example, an axially inner side surface of a radially outer end portion) by a fastening means such as a bolt and rotates together (integrally) with the rotation side flange.

The electric generator includes a stator directly or indirectly supported by the stationary side bearing ring member and a rotor directly or indirectly supported by the rotation side bearing ring member and generates electric power based on relative rotation between the stator and the rotor.

The wireless communication device wirelessly communicates with electronic equipment disposed on a vehicle body side.

In the configuration of the present invention, the rotation side bearing ring member is rotationally driven based on the driving force input through the internal gear, and the electric generator and the wireless communication device are disposed in an accommodating space at an axially inner side of the rotation side bearing ring member.

In the configuration of the present invention, the electric generator and the wireless communication device may be disposed on a center axis of the rotation side bearing ring member.

Further, in the configuration of the present invention, the wireless communication device may be directly or indirectly provided (supported and fixed) on the rotation side bearing ring member.

Further, in the configuration of the present invention, the driving wheel supporting rolling bearing unit may further include a battery for storing the electric power generated by the electric generator, and a charge control circuit for supplying the electric power generated by the electric generator to the battery to charge the battery. In this case, the battery and the charge control circuit may be provided on the rotation side bearing ring member.

A driving wheel supporting rolling bearing unit according to the present invention rotatably supports a vehicle wheel (driving wheel) to a suspension device and includes a stationary side bearing ring member (for example, an outer ring), a rotation side bearing ring member (for example, a hub), a plurality of rolling elements, a rotation side flange, an internal gear, a contactless power supply device (contactless power transmitting part), and a wireless communication device.

The stationary side bearing ring member is supported and fixed to the suspension device to be non-rotatable even during use.

The rotation side bearing ring member rotates together with the vehicle wheel while supporting and fixing the vehicle wheel.

Each of the rolling elements is rollably provided between peripheral surfaces of the stationary side bearing ring member and the rotation side bearing ring member which face each other.

The rotation side flange is configured to support and fix the vehicle wheel, and is provided on a part (for example, an outer peripheral surface of an axially outer end portion) of the rotation side bearing ring member.

The internal gear configures a reduction gear for transmitting a driving force of a driving source such as an electric motor to the rotation side bearing ring member and is fixed to the rotation side flange (for example, an axially inner side surface of a radially outer end portion) by a fastening means and rotates together (integrally) with the rotation side flange. The contactless power supply device includes a power transmitting side member (primary side member, circuit and coil) and a power receiving side member (secondary side member, circuit and coil) and performs power transmission from the power transmitting side member to the power receiving side member in a non-contact manner.

The wireless communication device wirelessly communicates with electronic equipment disposed on a vehicle body side.

In the configuration of the present invention, the rotation side bearing ring member is rotationally driven based on the driving force input through the internal gear, and at least the power receiving side member of the contactless power supply device and the wireless communication device are disposed in an accommodating space at an axially inner side of the rotation side bearing ring member.

Further, in the configuration of the present invention, even the power transmitting side member may also be disposed in the accommodating space.

Further, in the configuration of the present invention, the power transmitting side member may be directly or indirectly provided on the stationary side bearing ring member, and the power receiving side member and the wireless communication device may be directly or indirectly provided on the rotation side bearing ring member.

In the configuration of the present invention, for example, a connector capable of supplying power to a sensor arranged on the vehicle wheel and communicating a signal of the sensor may be provided at the axially outer end portion of the rotation side bearing ring member.

Further, according to the present invention, an axially inner end opening of the stationary side bearing ring member is covered by a cover formed of a radio wave permeable material, and a space inside the cover is the accommodating space.

### EFFECT OF THE INVENTION

According to the driving wheel supporting rolling bearing unit of the present invention, the driving force can be input from a position offset with respect to the center axis of the bearing unit, a sufficient reduction ratio can be obtained while preventing the increase of the number of components, and the electric generator and the wireless communication device can be disposed without enlarging the entire device.

That is, in the configuration of the present invention, the internal gear configuring a reduction gear is supported and fixed to the rotation side flange provided on a part of the rotation side bearing ring member, and the rotation side bearing ring member is rotationally driven based on the driving force input through the internal gear. Therefore, an input shaft (pinion gear) meshing with the internal gear can be disposed at a position offset from the center axis of the bearing unit. Further, since a sufficiently large diameter of the internal gear can be ensured, a reduction ratio of the reduction gear configured by the internal gear and the input shaft can be increased. Therefore, a driving force of the driving source such as an electric motor can be sufficiently increased without using a planetary reduction gear, and the number of the components can be decreased. According to the present invention, it is not necessary for a shaft transmitting the driving force to the rotation side bearing ring member to be coaxially connected to a center hole of the rotation side bearing ring member.

Therefore, a sufficiently large accommodating space can be ensured on the axially inner side of the rotation side bearing ring member. Accordingly, the electric generator, the wireless communication device, or the like can be disposed in the accommodating space, and the entire device can be prevented from becoming larger.

### BRIEF DESCRIPTION OF DRAWINGS

Fig. 1 is a cross-sectional view of a driving wheel supporting rolling bearing unit according to a first embodiment of the present invention.
Fig. 2 is an exploded perspective view of the driving wheel supporting rolling bearing unit shown in Fig. 1.
Fig. 3 is a cross-sectional view of a driving wheel supporting rolling bearing unit according to a second embodiment of the present invention.
Fig. 4 is an exploded perspective view of the driving wheel supporting rolling bearing unit shown in Fig. 3.

### DESCRIPTION OF EMBODIMENTS

### [First Embodiment]

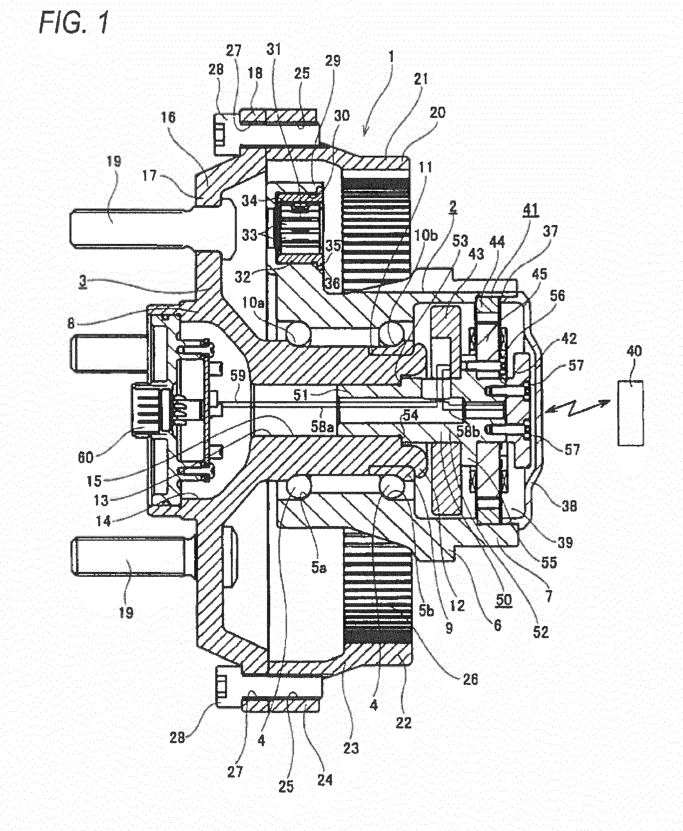

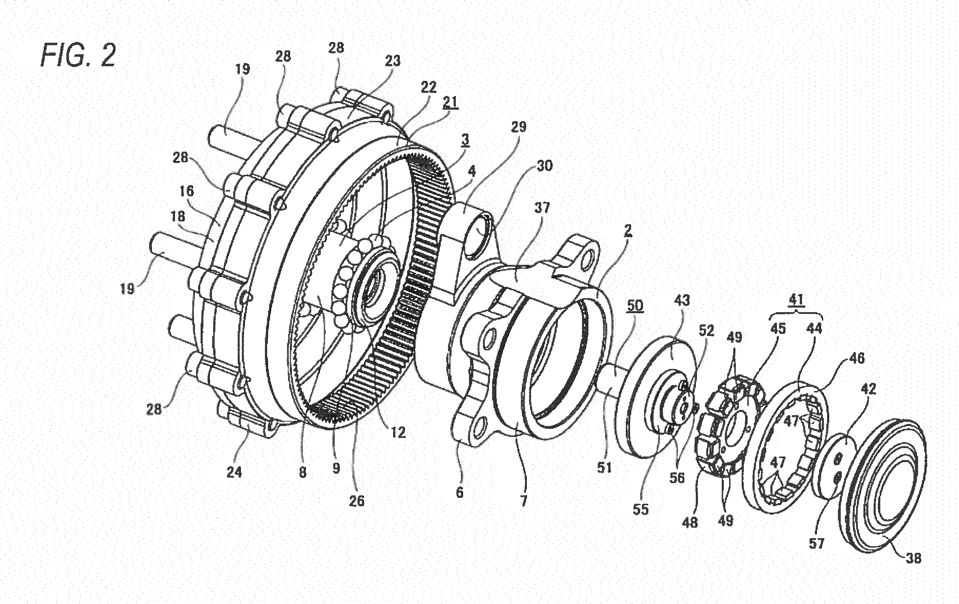

A first embodiment of the present invention will be described with reference to Figs. 1 and 2. In the first embodiment, a case will be described in which an electric generator is incorporated in a driving wheel supporting rolling bearing unit and a sensor or the like disposed in a vehicle wheel is operated by using electric power generated by the electric generator. A driving wheel supporting rolling bearing unit (hereinafter referred to as a rolling bearing unit) 1 of the first embodiment is used for rotatably supporting a driving wheel of an automobile to a knuckle configuring a suspension device and rotationally driving the driving wheel and includes an outer ring 2 corresponding to a stationary side bearing ring member in the claims, a hub 3 corresponding to a rotation side bearing ring member in the claims, and a plurality of rolling elements (balls) 4, 4.

The outer ring 2 is formed into a substantially cylindrical shape as a whole and includes double-row outer ring raceways 5a, 5b on an inner peripheral surface and a stationary side flange 6 at on an outer peripheral surface. The outer ring 2 is supported by the knuckle and does not rotate in a use state. In the first embodiment, an expanded cylindrical portion 7 having an inner diameter larger than a portion of the outer ring 2 adjacent to an axially outer side is provided more axially inward (an axially inner side refers to a center side in a vehicle width direction when assembled to the suspension device, and on the contrary, an axially outer side refers to an outer side in the vehicle width direction when assembled to the suspension device, which is applicable to the description and claims) than the outer ring raceway 5b of the outer ring 2 on an axially inner side. An axially inner end portion of the expanded cylindrical portion 7 protrudes largely inward in an axial direction than an axially inner end portion (crimping portion 12 described later) of the hub 3.

The hub 3 is formed by assembling a hub body 8 and an inner ring 9, includes double-row inner ring raceways 10a, 10b on an outer peripheral surface, and is supported coaxially with the outer ring 2 on an inner diameter side of the outer ring 2. Specifically, the inner ring raceway 10a on the axially outer side is formed directly at an axially intermediate portion of an outer peripheral surface of the hub body 8, and the inner ring 9 formed with the inner ring raceway 10b on the axially inner side on an outer peripheral surface thereof is externally fitted and fixed to a small-diameter step portion 11 similarly formed at an axially inner end side portion. An axially inner end surface of the inner ring 9 is pressed by the crimping portion 12 formed by plastically deforming an axially inner end portion of the hub body 8 radially outward. A penetration hole 13 penetrating in the axial direction is provided in a center portion of the hub body 8. The penetration hole 13 is configured by an outer end side large diameter hole 14 provided at an axially outer end portion and a small diameter hole 15 provided at an axially intermediate portion. A rotation side flange 16 is provided at a portion on an outer peripheral surface of the axially outer end portion of the hub body 8 which protrudes axially outward than an axially outer end opening of the outer ring 2. The rotation side flange 16 extends radially outward for supporting the vehicle wheel.

The rotation side flange 16 is formed in a cross-sectional crank shape, and a tip half part 18 positioned radially outward is offset axially inward with respect to a base half part 17 positioned radially inward. A plurality of (for example, four) stud bolts 19, 19 are press-fitted and fixed to the base half part 17. A wheel (vehicle wheel) (not shown) is coupled and fixed to the hub 3 by using the stud bolts 19, 19.

The rolling elements (balls) 4, 4 are rollably provided between the outer ring raceways 5a, 5b and the inner ring raceways 10a, 10b which face each other while being held by a cage (not shown) respectively for each of the two rows, in a state where a preload is applied with a back-to-back arrangement. In the illustrated example, diameters, pitch circle diameters, and the contact angles are set to be equal to each other between the both rows of the rolling elements 4, 4. However, when implementing the present invention, the diameters of both rows of the rolling elements are not necessarily the same. For example, the diameters of the rolling elements configuring an inner side (axially inner side) row may be larger than those of the rolling elements configuring an outer side (axially outer side) row, and the pitch circle diameter of the outer side row may be larger than that of the inner side row. In the illustrated example, balls are used as the rolling elements, but rollers (including tapered rollers and cylindrical rollers) and needles may also be used as the rolling elements when implementing the present invention.

Particularly, in the first embodiment, an internal gear member 21 configuring a reduction gear 20 together with a pinion gear (not shown) is supported and fixed to the rotation side flange 16. The internal gear member 21 is formed into a substantially cylindrical shape as a whole and includes a small diameter cylinder 22 at an axially inner half part and a large diameter cylinder 23 at an axially outer half part. A mounting flange portion 24 protruding radially outward is provided on an outer peripheral surface of an axially outer end portion of the internal gear member 21 (large diameter cylinder 23). The mounting flange portion 24 is provided with coupling holes (screw holes or through holes) 25, 25 penetrating in the axial direction. An internal gear 26 having a spur tooth shape (without a torsion angle) is provided on an inner peripheral surface of the axially inner half part (an inner peripheral surface of the small diameter cylinder 22) of the internal gear member 21.

In a state where the coupling holes 25, 25 and through holes 27, 27 formed at the head half part 18 of the rotation side flange 16 are aligned with each other, the internal gear member 21 having the above configuration is supported and fixed to an axially inner side surface of the head half part 18 by screwing or inserting the coupling members (bolts) 28, 28 into the through holes 27, 27 and tightening them further. In this state, the internal gear member 21 is disposed around an axially outer half part of the outer ring 2. A spur pinion gear as an input shaft (not shown) is meshed with the internal gear 26 configuring the internal gear member 21. Therefore, the hub 3 is rotationally driven by a driving source such as an electric motor (not shown) via the internal gear member 21. In the illustrated example, an inner diameter dimension of the large diameter cylinder 23 is larger than a root circle diameter of the internal gear 26. As a result, even when the internal gear 26 is broached or slotted, workability of the internal gear 26 is ensured as not processed into a blind hole.

In order to rotatably support the pinion gear meshing with the internal gear 26, a support arm part 29 protruding radially outward is provided at a position in a circumferential direction of an outer peripheral surface of an axially outer end portion of the outer ring 2, which is a position corresponding to an upper end portion when the outer ring 2 is supported and fixed to the knuckle. In the illustrated example, the support arm part 29 is provided radially inward of the large diameter cylinder 23 configuring the internal gear member 21. A support hole 30 penetrating in the axial direction is provided at a tip end portion (a radially outer end portion) of the support arm part 29. A radial needle bearing 31 is disposed (press-fitted) inside the support hole 30.

The radial needle bearing 31 includes an outer race 32, a plurality of needles 33, 33, and a cage 34, and the outer race 32 is internally fitted and fixed inside the support hole 30. In this state, an outward flange portion 35 provided on an outer peripheral surface of an axially inner end portion of the outer race abuts against a step surface 36 formed on an inner peripheral surface of the support hole 30. Accordingly, the outer race 32 is positioned in the axial direction with respect to the support hole 30. The needles 33, 33 are rollably provided between a cylindrical surface shaped outer ring raceway formed on an inner peripheral surface of the outer race 32 and a cylindrical surface shaped inner ring raceway formed on an outer peripheral surface of the pinion gear while being held by the cage 34.

In order to rotatably support a tip end portion (an axially outer end portion) of the pinion gear, a recessed portion (a relief part) 37 recessed radially inward is provided at a position (the upper end portion of the outer ring 2 when assembled to the vehicle) of the outer peripheral surface of the outer ring 2 which matches with the support arm portion 29 in the circumferential direction in phase.

A bottomed cylindrical cover 38 is mounted to an axially inner end opening of the outer ring 2. The cover 38 is formed of a resin (a radio wave permeable material which may include a fiber reinforced resin) with excellent radio wave permeability (capable of permeating radio waves used for wireless communication) such as ABS resin (acrylonitrile, butadiene, styrene copolymerized synthetic resin) and AS resin (copolymer of acrylonitrile and styrene (copolymerization compound)). In the first embodiment, a sufficiently large accommodating space 39 is provided inside (axially outer side of) the cover 38. The accommodating space 39 is located (present) at an axially inner side of the hub 3 and a radially inner side of the expanded cylindrical portion 7.

In the first embodiment, the rolling bearing unit 1 includes an electric generator 41 having a power generation function, a wireless communication device 42 having a wireless communication function, a battery (not shown) having an electricity storage function, and a charger (a charge control circuit) 43 having a charging function, so that electric power is supplied to one or more sensors (not shown) arranged on the vehicle wheel to detect a state quantity of a tire, and an output signal of the sensor is transmitted to a calculator 40 disposed on a vehicle body side for vehicle motion control.

The electric generator 41 is a magnet type alternating current electric generator which generates alternating current of three phases and generates electric power to be supplied to sensors (each sensor on a tire side and a wheel side), and includes a stator 44 and a rotor 45 concentrically arranged with each other. Incidentally, an alternating current electric generator which generates a single phase alternating current may also be used when implementing the present invention.

The stator 44 includes a support ring 46 formed into a cylindrical shape by a magnetic metal plate, and permanent magnets 47, 47 supported and fixed at equal intervals at a plurality of positions in the circumferential direction of an inner peripheral surface of the support ring 46. The permanent magnets 47, 47 are formed into a block shape and magnetized in the radial direction, and magnetization direction is change between the circumferentially adjacent permanent magnets 47, 47. Therefore, S poles and N poles are alternately arranged at equal intervals on an inner side of the support ring 46. The support ring 46 is internally fitted and fixed to an inner peripheral surface of an axially inner end portion (the expanded cylindrical portion 7) of the outer ring 2. A step surface is provided at an axially intermediate portion of an inner peripheral surface of the expanded cylindrical portion 7, so as to prevent the support ring 46 from being displaced axially outward.

On the other hand, the rotor 45 includes a core 48 formed by laminating a plurality of electromagnetic steel sheets, and coils 49, 49. The coils 49, 49 are wound around a plurality of radially arranged teeth (salient poles) configuring the core 48. In the first embodiment, the core 48 configuring the rotor 45 is externally fitted and fixed to an axially inner end portion of the support shaft 50 internally fitted and fixed to the small diameter hole 15 configuring the penetration hole 13 of the hub body 8 and fixed by a screw. The support shaft 50 is formed in a stepped hollow cylindrical shape and includes a small diameter shaft 51 provided at an axially outer end portion and internally fitted and fixed to the small diameter hole 15, a large diameter shaft 52 provided at a portion exposed from the small diameter hole 15, and an abutting surface 53 provided between the small diameter shaft 51 and the large diameter shaft 52. Further, when the small diameter shaft 51 is fitted (inserted) into the small diameter hole 15 of the hub body 8, the abutting surface 53 abuts against a step surface 54 formed at an axially inner end side portion of the small diameter hole 15, so that the support shaft 50 is positioned in the axial direction with respect to the hub body 8. An outward flange portion 55 protruding radially outward is provided at an axially intermediate portion of the large diameter shaft 52. In the first embodiment, while the core 48 is externally fitted and fixed to an axially inner end portion of the large diameter shaft 52, the core 48 is screwed and fixed to the outward flange portion 55 by a bolt 56.

In the first embodiment, as described above, the stator 44 is supported and fixed on the inner peripheral surface of the expanded cylindrical portion 7 of the outer ring 2, and the rotor 45 is supported and fixed to the hub body 8 through the support shaft 50. In this state, the stator 44 and the rotator 45 are concentrically disposed in the accommodating space 39, an outer peripheral surface of the rotator 45 faces an inner peripheral surface of the permanent magnets 47, 47 configuring the stator 44 in the radial direction via a minute clearance. By adopting such a configuration, when the rotator 45 rotates together with the hub 3, an electromotive force is generated by an electromagnetic induction action of each coil 49, 49. In other words, the electric generator 41 generates electric power by rotating the hub 3 together with the vehicle wheel.

The wireless communication device 42 performs wireless communication (both transmission and reception are possible in the first embodiment) with the calculator 40 which is an electronic equipment provided on the vehicle body side and includes a wireless communication circuit (substrate) and an antenna. The wireless communication device 42 is fixed to an axially inner end surface of the support shaft 50 by a plurality of bolts 57, 57. Therefore, in the first embodiment, the wireless communication device 42 is located at a center axis of the hub 3 on an axially inner side of the hub 3. Thereby, the wireless communication device 42 is disposed axially inward of the accommodating space 39 and the electric generator 41, and the antenna configuring the wireless communication device 42 is closely facing a bottom of the cover 38 in the axial direction. Accordingly, a radio signal transmitted and received by the antenna is effectively prevent from being obstructed by the cover 38, so that wireless communication can be efficiently performed between the wireless communication device 42 and the calculator 40.

The charger (the charge control circuit) 43 is externally fitted and fixed to a portion of the large diameter shaft 52 configuring the support shaft 50 which is more axially outward than the outward flange portion 55 and is disposed in the accommodating space 39. The charger 43 includes a rectifier circuit for converting an AC voltage generated by the electric generator 41 into a DC voltage, a charge/discharge control circuit for controlling charging and discharging according to a remaining amount of the battery (included in the charger 43) (not shown) and a power generation amount of the electric generator 41, and a voltage control circuit for outputting a constant voltage regardless of changes in a rotation speed of the rotor 45. The charger 43 rectifies the electric power generated by the electric generator 41 and supplies the electric power to the sensor (not shown) and the wireless communication device 42 disposed on the vehicle wheel with a constant voltage value. When it is determined that the electric power generated by the electric generator 41 is not sufficient to operate the sensor or the wireless communication device 42, electric power is supplied from the battery to the sensor or the wireless communication device 42. In the drawings, wiring for connecting the charger 43 and the electric generator 41 is omitted. Wiring (power supply wires) 58a, 58b connecting the charger 43 and the sensor or the wireless communication device 42 is disposed inside the support shaft 50 and the penetration hole 13 of the hub body 8. As described later, a signal of the sensor is transmitted to the wireless communication device 42 through wiring (signal wiring) 59 disposed inside the support shaft 50 and the penetration hole 13 of the hub body 8.

A connector 60 is disposed (internally fitted and fixed) at a center portion (in the outer end side large diameter hole 14) of the axially outer end portion of the hub body 8, so as to supply the electric power generated by the electric generator 41 to the sensor, and transmit the output signal of the sensor to the wireless communication device 42. Accordingly, in the first embodiment, the wiring 58a for supplying electric power to the sensor and the wiring 59 for transmitting the output signal of the sensor to the wireless communication device 42 are respectively connected to the connector 60.

From the viewpoint of reducing the cost at the time of tire replacement, among the sensors for measuring state quantities of the tire, only a sensor for measuring a state quantity which cannot be measured unless the sensor is arranged on the tire such as a wear sensor, a tire distortion sensor and a temperature sensor is directly arranged on the tire, and a sensor for measuring a state quantity which can be measured without arranging the sensor on the tire such as an air pressure sensor, a wheel distortion sensor and an acceleration sensor is arranged on the wheel (for example, on a rim part).

In the first embodiment having the above configuration, through the reduction gear 20 configured by the pinion gear which is an input shaft (driving shaft) rotatably supported to the support arm part 29 of the outer ring 2 and the internal gear 26 fixed to the rotation side flange 16, a driving force of a driving source such as an electric motor (not shown) is transmitted to the hub 3 and rotationally drives the hub 3. Accordingly, the driving wheel supporting rolling bearing unit 1 of the first embodiment configures an in-wheel motor (electric vehicle driving device) with a speed reduction together with a driving source.

Particularly, in the first embodiment, since the internal gear 26 configuring the reduction gear 20 is fixed to the rotation side flange 16, the pinion gear can be disposed at a position offset from a center axis (rotation center) of the rolling bearing unit 1. Further, since a sufficiently large diameter of the internal gear 26 can be ensured, a number of teeth of the internal gear 26 can be sufficiently increased. Therefore, a reduction ratio of the reduction gear 20 configured by the internal gear 26 and the pinion gear can be increased. Therefore, the driving force of the driving source such as an electric motor can be sufficiently increased without using a planetary reduction gear, and the number of the components can be decreased.

Further, in the first embodiment, the driving shaft (for example, a drive shaft) for driving the hub 3 is not necessarily connected to a center hole of the hub 3 coaxially. Therefore, a sufficiently large accommodating space 39 can be provided on the axially inner side of the hub 3 even for a driving wheel. Accordingly, the electric generator 41, the wireless communication device 42, the charger 43 and the battery can be disposed in the accommodating space 39 without enlarging the rolling bearing unit 1.

In the rolling bearing unit 1 of the first embodiment, when the vehicle wheel rotates based on a driving force of a driving source, the hub 3 which is the rotation side bearing ring member rotates, and the rotor 45 supported and fixed to the axially inner end portion of the hub 3 rotates relative to the stator 44 supported and fixed to the outer ring 2 which is the stationary side bearing ring member. As a result, the electric generator 41 configured by the stator 44 and the rotor 45 generates electric power. Then, an AC voltage generated by the electric generator 41 is transmitted to the charger 43 through a cable (not shown) or the like. After being converted into a DC voltage by the charger 43, the voltage is supplied to the sensor arranged on the vehicle wheel through the wiring 58a and the connector 60. Accordingly, the sensor detects a state quantity (for example, tire air pressure, distortion, vertical force, acceleration, temperature, or the like) of the tire and the wheel. The electric power generated by the electric generator 41 is also supplied to the wireless communication device 42 through the wiring 58b.

An output signal of a sensor is transmitted to the connector 60, and then transmitted to the wireless communication device 42 via the wiring 59. Further, the output signal of the sensor is wirelessly transmitted to the calculator 40 disposed on the vehicle body side through the bottom of the cover 38 by the antenna configuring the wireless communication device 42. Accordingly, the calculator 40 receives the state quantity of the tire and the wheel which is the output signal of the sensor and uses the state quantity to the vehicle motion control.

As described above, according to the rolling bearing unit 1 of the first embodiment, a state quantity of the vehicle wheel can be detected, and since the sensor is arranged on the vehicle wheel side, the state quantity of the vehicle wheel can be accurately detected without being affected by an operating state of the brake device as in a case of being arranged on a rolling bearing unit 1 side. In the first embodiment, since the electric power generated by the electric generator 41 is supplied to the sensor, and an output signal of the sensor is transmitted to the calculator 40 on the vehicle body side via the wireless communication device 42, handling of the harness is not necessarily performed when the rolling bearing unit 1 is attached to the knuckle, and assembly workability can be improved accordingly. Further, even when replacing a tire, the electric generator 41, the wireless communication device 42, the charger 43, the battery and the connector 60 provided in the rolling bearing unit I can be continuously used as they are (it shall be sufficient to replace only the tire arranged on the tire). Therefore, as compared with a case where the power generation device or the like is provided in the tire, the cost at the time of the tire replacement can be kept low. Further, even when tire rotation (change of tire position) is performed to prevent uneven wear, since there is no change in an attachment position of the rolling bearing unit 1 itself having a wireless communication function, a problem in determining from which tire a signal is received by the calculator 40 at the vehicle body side can be prevented.

### [Second Embodiment]

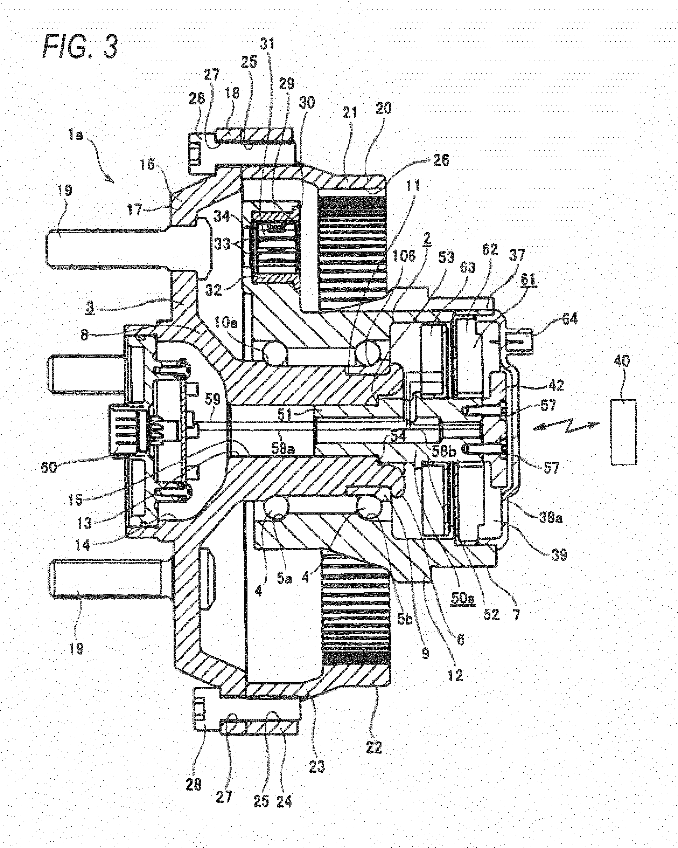

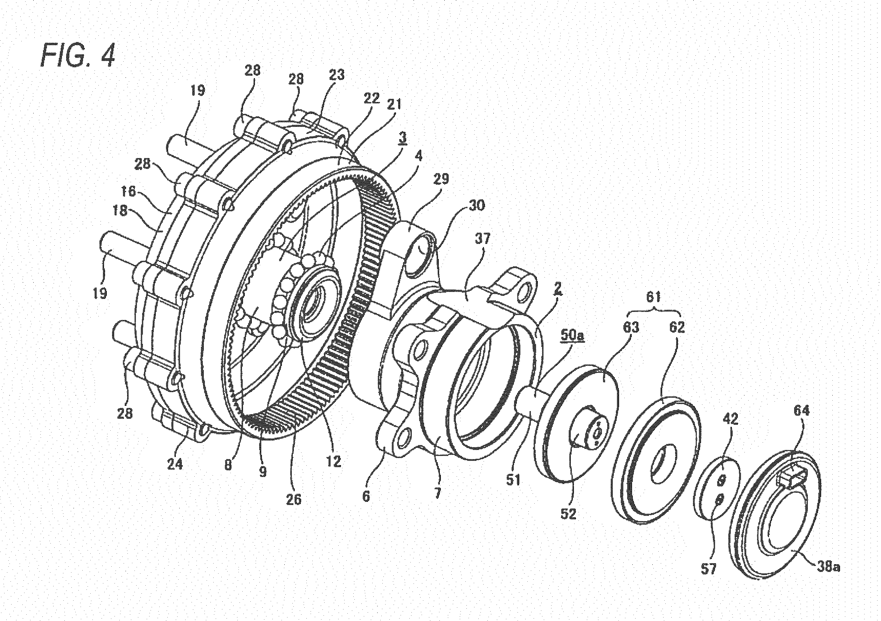

A second embodiment of the present invention will be described with reference to Figs. 3 and 4. In the second embodiment, instead of the electric generator, a case where a contactless power supply device (contactless power transmitting part) 61 is incorporated in a rolling bearing unit 1a, and a sensor or the like disposed on a vehicle wheel is operated using electric power supplied from an outside source through the contactless power supply device 61 will be described. Since basic configuration of the rolling bearing unit 1a is the same as that in the first embodiment, duplicate descriptions will be omitted. Hereinafter, the characterizing part of the second embodiment related to the contactless power supply device 61 will be mainly described.

The contactless power supply device 61 is an electromagnetic induction type device and includes a power transmitting side member 62 having a power transmitting coil (primary side coil) and a power transmitting circuit (primary side circuit), and a power receiving side member 63 having a power receiving coil (secondary side coil) and a power receiving circuit (secondary side circuit). The power transmitting side member 62 is internally fitted and fixed to the inner peripheral surface of the axially inner end portion (expanded cylindrical portion 7) of the outer ring 2. A step surface is provided at an axially intermediate portion of an inner peripheral surface of the expanded cylindrical portion 7, so as to prevent the power transmitting side member 62 from being displaced axially outward. Electric power (power source) is supplied from the vehicle body side to such a power transmitting side member 62 via a power source connector 64 provided at a cover 38a which covers the axially inner end opening of the outer ring 2.

On the other hand, the power receiving side member 63 is externally fitted to an axially inner end portion (large diameter shaft 52) of a support shaft 50a which is internally fitted and fixed to the penetration hole 13 (small diameter hole 15) of the hub body 8. The power receiving side member 63 receives the electric power transmitted from the power transmitting side member 62 in a non-contact manner and rectifies it into a direct current to generate a desired power source voltage. Further, the sensor arranged on the vehicle wheel and the wireless communication device 42 supported and fixed to an axially inner end surface of the support shaft 50 are operated by the electric power obtained by the power receiving side member 63. The power receiving side member 63 and the power transmitting side member 62 are disposed in the accommodating space 39 in a state of being disposed to face each other in the axial direction via a minute clearance.

In the second embodiment having the above configuration, the contactless power supply device 61 is provided instead of the electric generator, and the electric power is supplied to the sensor and the wireless communication device 42 irrespective of a rotation speed of the hub 3 which is the rotation side bearing ring member, so that the charger (charge control circuit) and the battery are not required. In the illustrated example, a case where the power source connector 64 supplying electric power to the power transmitting side member 62 is provided to a cover 38a is described, but the power source connector may also be provided to the outer ring 2. Further, the power transmitting side member 62 may be fixed to the cover 38a or may be fixed to a suspension device (outside of the accommodating space 39) for supporting and fixing the outer ring 2.

Other configurations and operational effects of the second embodiment are similar to those in the first embodiment.

### INDUSTRIAL APPLICABILITY

When implementing the present invention, the pinion gear rotatably supported to the outer ring is not directly meshed with the internal gear, and one or more gears may be interposed between the pinion gear and the internal gear so as to further increase the reduction ratio. Although out of the technical scope of the present invention, a configuration in which an external gear is fixed to the rotation side flange and the rotation side bearing ring member is rotationally driven may also be adopted. Further, when implementing the present invention, a structure of the contactless power supply device is not limited to the electromagnetic induction structure shown in the second embodiment, but may be a contactless power supply device of various conventionally known structures, such as a magnetic field resonance manner and an electric field resonance manner.

### DESCRIPTION OF REFERENCE NUMERALS

- 1, 1a: rolling bearing unit (driving wheel supporting rolling bearing unit)
- 2: outer ring (stationary side bearing ring member)
- 3: hub (rotation side bearing ring member)
- 4: rolling element
- 20: reduction gear
- 26: internal gear
- 38, 38a: cover
- 39: accommodating space
- 41: electric generator
- 42: wireless communication device
- 61: contactless power supply device
- 62: power transmitting side member
- 63: power receiving side member

## Claims

1. A driving wheel supporting rolling bearing unit (1) comprising:
a stationary side bearing ring member (2) supported and fixed to a suspension device to be non-rotatable;
a rotation side bearing ring member (3) configured to rotate together with a vehicle wheel while supporting and fixing the vehicle wheel;
a plurality of rolling elements (4) rollably provided between peripheral surfaces of the stationary side bearing ring member (2) and the rotation side bearing ring member (3) which face each other;
a rotation side flange (16) provided on a part of the rotation side bearing ring member (3) and configured to support and fix the vehicle wheel;
an internal gear (26) fixed to the rotation side flange (16) and configured to rotate together with the rotation side flange (16) so as to configure a reduction gear (20),
wherein the rotation side bearing ring member (3) is rotationally driven based on a driving force input through the internal gear (26),
**characterized by**
an electric generator (41) including a stator (44) supported by the stationary side bearing ring member (2) and a rotor (45) supported by the rotation side bearing ring member (3), and configured to generate electric power based on relative rotation between the stator (44) and the rotor (45); and
a wireless communication device (42) configured to wirelessly communicate with an electronic equipment (40) disposed on a vehicle body side,
the electric generator (41) and the wireless communication device (42) being disposed in an accommodating space (39) at an axially inner side of the rotation side bearing ring member (3),
wherein an axially inner end opening of the stationary side bearing ring member (2) is covered by a cover (38) formed of a radio wave permeable material, and a space inside the cover (38) is the accommodating space (39).

2. A driving wheel supporting rolling bearing unit (1) comprising:
a stationary side bearing ring member (2) supported and fixed to a suspension device to be non-rotatable;
a rotation side bearing ring member (3) configured to rotate together with a vehicle wheel while supporting and fixing the vehicle wheel;
a plurality of rolling elements (4) rollably provided between peripheral surfaces of the stationary side bearing ring member (2) and the rotation side bearing ring member (3) which face each other;
a rotation side flange (16) provided on a part of the rotation side bearing ring member (3) and configured to support and fix the vehicle wheel;
an internal gear (26) fixed to the rotation side flange (16) and configured to rotate together with the rotation side flange (16) so as to configure a reduction gear (20),
wherein the rotation side bearing ring member (3) is rotationally driven based on a driving force input through the internal gear (26),
**characterized by**
a contactless power supply device (61) including a power transmitting side member (62) and a power receiving side member (63), and configured to transmit electric power from the power transmitting side member (62) to the power receiving side member (63) in a non-contact manner; and
a wireless communication device (42) configured to wirelessly communicate with an electronic equipment (40) disposed on a vehicle body side,
at least the power receiving side member (63) of the contactless power supply device (61) and the wireless communication device (42) being disposed in an accommodating space (39) at an axially inner side of the rotation side bearing ring member (3),
wherein an axially inner end opening of the stationary side bearing ring member (2) is covered by a cover (38) formed of a radio wave permeable material, and a space inside the cover (38) is the accommodating space (39).

3. The driving wheel supporting rolling bearing unit (1) according to claim 1 or 2, further comprising
a supporting shaft (50) formed with a penetration hole,
wherein a signal wiring (59) is provided at the penetration hole.

## Patentansprüche

1. Wälzlager-Einheit (1) zum Lagern eines Antriebsrades, die umfasst:
ein Lagerring-Element (2) der stationären Seite, das an einer Aufhängungsvorrichtung so gelagert und fixiert ist, dass es nicht gedreht werden kann;
ein Lagerring-Element (3) der rotierenden Seite, das so eingerichtet ist, dass es sich zusammen mit einem Fahrzeugrad dreht, und dabei das Fahrzeugrad lagert und fixiert;
eine Vielzahl von Wälzkörpern (4), die zwischen Umfangsflächen des Lagerring-Elementes (2) der stationären Seite und des Lagerring-Elementes (3) der rotierenden Seite, die einander zugewandt sind, so angeordnet sind, dass sie rollen können;
einen Flansch (16) der rotierenden Seite, der sich an einem Teil des Lagerring-Elementes (3) der rotierenden Seite befindet und zum Lagern sowie Fixieren des Fahrzeugrades eingerichtet ist;
ein Innenzahnrad (26), das an dem Flansch (16) der rotierenden Seite befestigt und so eingerichtet ist, dass es sich zusammen mit dem Flansch (16) der rotierenden Seite dreht und so ein Untersetzungsgetriebe (20) bildet,
wobei das Lagerring-Element (3) der rotierenden Seite mittels einer Antriebskraft rotierend angetrieben wird, die über das Innenzahnrad (26) eingeleitet wird,
**gekennzeichnet durch**
einen Stromgenerator (41), der einen Stator (44), der über das Lagerring-Element (2) der stationären Seite gelagert ist, sowie einen Rotor (45) enthält, der über das Lagerring-Element (3) der rotierenden Seite gelagert ist, und der so eingerichtet ist, dass er Strom mittels relativer Drehung des Stators (44) und des Rotors (45) zueinander erzeugt; sowie
eine Drahtlos-Kommunikationsvorrichtung (42), die zum drahtlosen Kommunizieren mit einer elektronischen Einrichtung (40) eingerichtet ist, die an einer Fahrzeugkarosserie-Seite angeordnet ist,
wobei der Stromgenerator (41) und die Drahtlos-Kommunikationsvorrichtung (42) in einem Aufnahmeraum (39) an einer axial innen liegenden Seite des Lagerring-Elementes (3) der rotierenden Seite angeordnet sind,
und eine axial innen liegende Endöffnung des Lagerring-Elementes (2) der stationären Seite durch eine Abdeckung (38) abgedeckt wird, die aus einem für Radiowellen durchlässigen Material besteht, und ein Raum im Inneren der Abdeckung (38) der Aufnahmeraum (39) ist.

2. Wälzlager-Einheit (1) zum Lagern eines Antriebsrades, die umfasst:
ein Lagerring-Element (2) der stationären Seite, das an einer Aufhängungsvorrichtung so gelagert und fixiert ist, dass es nicht gedreht werden kann;
ein Lagerring-Element (3) der rotierenden Seite, das so eingerichtet ist, dass es sich zusammen mit einem Fahrzeugrad dreht, und dabei das Fahrzeugrad lagert und fixiert;
eine Vielzahl von Wälzkörpern (4), die zwischen Umfangsflächen des Lagerring-Elementes (2) der stationären Seite und des Lagerring-Elementes (3) der rotierenden Seite, die einander zugewandt sind, so angeordnet sind, dass sie rollen können;
einen Flansch (16) der rotierenden Seite, der sich an einem Teil des Lagerring-Elementes (3) der rotierenden Seite befindet und zum Lagern sowie Fixieren des Fahrzeugrades eingerichtet ist;
ein Innenzahnrad (26), das an dem Flansch (16) der rotierenden Seite befestigt und so eingerichtet ist, dass es sich zusammen mit dem Flansch (16) der rotierenden Seite dreht und so ein Untersetzungsgetriebe (20) bildet,
wobei das Lagerring-Element (3) der rotierenden Seite mittels einer Antriebskraft rotierend angetrieben wird, die über das Innenzahnrad (26) eingeleitet wird,
**gekennzeichnet durch**
eine kontaktlose Stromversorgungsvorrichtung (61), die ein Element (62) der Stromsende-Seite und ein Element (63) der Stromempfangs-Seite einschließt und zum Kontaktlosen Senden von Strom von dem Element (62) der Stromsende-Seite zu dem Element (63) der Stromempfangs-Seite eingerichtet ist; sowie
eine Drahtlos-Kommunikationsvorrichtung (42), die zum drahtlosen Kommunizieren mit einer elektronischen Vorrichtung (40) eingerichtet ist, die an einer Fahrzeugkarosserie-Seite angeordnet ist,
wobei wenigstens das Element (63) der Stromempfangs-Seite der kontaktlosen Stromversorgungsvorrichtung (61) und die Drahtlos-Kommunikationsvorrichtung (42) in einem Aufnahmeraum (39) an einer axial innen liegenden Seite des Lagerring-Elementes (3) der rotierenden Seite angeordnet sind,
und eine axial innen liegende Endöffnung des Lagerring-Elementes (2) der stationären Seite durch eine Abdeckung (38) abgedeckt wird, die aus einem für Radiowellen durchlässigen Material besteht, und ein Raum im Inneren der Abdeckung (38) der Aufnahmeraum (39) ist.

3. Wälzlager-Einheit (1) zum Lagern eines Antriebsrades nach Anspruch 1 oder 2, die des Weiteren
eine Trage-Welle (50) umfasst, die mit einem Durchgangsloch versehen ist,
wobei sich eine Signalleitung (59) in dem Durchgangsloch befindet.

## Revendications

1. Unité de palier à roulement supportant une roue motrice (1) comprenant :
un élément de bague de palier côté fixe (2) supporté et fixé à un dispositif de suspension pour ne pas pouvoir tourner ;
un élément de bague de palier côté rotation (3) configuré pour tourner ensemble avec une roue de véhicule tout en supportant et fixant la roue de véhicule ;
une pluralité d'éléments roulants (4) agencés de manière roulante entre des surfaces périphériques de l'élément de bague de palier côté fixe (2) et l'élément de bague de palier côté rotation (3) qui se font face l'un et l'autre ;
une bride latérale rotative (16) agencée sur une partie de l'élément de bague de palier côté rotation (3) et configurée pour supporter et fixer la roue de véhicule ;
un engrenage interne (26) fixé à la bride latérale rotative (16) et configuré pour tourner ensemble avec la bride latérale rotative (16) de manière à configurer un engrenage réducteur (20),
dans laquelle l'élément de bague de palier côté rotation (3) est entraîné en rotation sur la base d'une force d'entraînement introduite par l'intermédiaire de l'engrenage interne (26),
**caractérisée par**
un générateur électrique (41) comprenant un stator (44) supporté par l'élément de bague de palier côté fixe (2) et un rotor (45) supporté par l'élément de bague de palier côté rotation (3), et configuré pour générer de l'énergie électrique sur la base d'une rotation entre le stator (44) et le rotor (45) ; et
un dispositif de communication sans fil (42) configuré pour communiquer sans fil avec un équipement électronique (40) disposé sur un côté de carrosserie de véhicule,
le générateur électrique (41) et le dispositif de communication sans fil (42) étant disposés dans un espace de logement (39) sur un côté axialement intérieur de l'élément de bague de palier côté rotation (3),
dans laquelle une ouverture d'extrémité axialement intérieure de l'élément de bague de palier côté fixe (2) est recouverte par un couvercle (38) formé d'un matériau perméable aux ondes radio, et un espace à l'intérieur du couvercle (38) est l'espace de logement (39).

2. Unité de palier à roulement supportant une roue motrice (1) comprenant :
un élément de bague de palier côté fixe (2) supporté et fixé à un dispositif de suspension pour ne pas pouvoir tourner ;
un élément de bague de palier côté rotation (3) configuré pour tourner ensemble avec une roue de véhicule tout en supportant et fixant la roue de véhicule ;
une pluralité d'éléments roulants (4) agencés de manière roulante entre des surfaces périphériques de l'élément de bague de palier côté fixe (2) et l'élément de bague de palier côté rotation (3) qui se font face l'un et l'autre ;
une bride latérale rotative (16) agencée sur une partie de l'élément de bague de palier côté rotation (3) et configurée pour supporter et fixer la roue de véhicule ;
un engrenage interne (26) fixé à la bride latérale rotative (16) et configuré pour tourner ensemble avec la bride latérale rotative (16) de manière à configurer un engrenage réducteur (20),
dans laquelle l'élément de bague de palier côté rotation (3) est entraîné en rotation sur la base d'une force d'entraînement introduite par l'intermédiaire de l'engrenage interne (26),
**caractérisée par**
un dispositif d'alimentation en énergie sans contact (61) comprenant un élément côté transmission d'énergie (62) et un élément côté réception d'énergie (63), et configuré pour transmettre de l'énergie électrique depuis l'élément côté transmission d'énergie (62) à l'élément côté réception d'énergie (63) d'une manière sans contact ; et
un dispositif de communication sans fil (42) configuré pour communiquer sans fil avec un équipement électronique (40) disposé sur un côté de carrosserie de véhicule,
au moins l'élément côté réception d'énergie (63) du dispositif d'alimentation en énergie sans contact (61) et le dispositif de communication sans fil (42) étant disposés dans un espace de logement (39) sur un côté axialement intérieur de l'élément de bague de roulement côté rotation (3),
dans laquelle une ouverture d'extrémité axialement intérieure de l'élément de bague de palier côté fixe (2) est recouverte par un couvercle (38) formé d'un matériau perméable aux ondes radio, et un espace à l'intérieur du couvercle (38) est l'espace de logement (39).

3. Unité de palier à roulement supportant une roue motrice (1) selon la revendication 1 ou 2, comprenant en outre
un arbre de support (50) formé d'un trou de pénétration,
dans lequel un câblage de signal (59) est disposé au niveau du trou de pénétration.
